(19) Europäisches Patentamt
European Patent Office
Office européen des brevets

(11) EP 2 824 131 B1

(12) **EUROPEAN PATENT SPECIFICATION**

(45) Date of publication and mention of the grant of the patent:
**24.04.2019 Bulletin 2019/17**

(21) Application number: **13758627.7**

(22) Date of filing: **01.03.2013**

(51) Int Cl.:
***C08J 5/04*** *(2006.01)* ***B29C 45/00*** *(2006.01)*
***B29K 105/18*** *(2006.01)*

(86) International application number:
**PCT/JP2013/055733**

(87) International publication number:
**WO 2013/133181 (12.09.2013 Gazette 2013/37)**

(54) **THERMALLY CONDUCTIVE RESIN MOLDED ARTICLE AND METHOD FOR MANUFACTURING THERMALLY CONDUCTIVE RESIN MOLDED ARTICLE**

FORMKÖRPER AUS EINEM WÄRMELEITENDEN HARZ UND VERFAHREN ZUR HERSTELLUNG EINES FORMKÖRPERS AUS EINEM WÄRMELEITENDEN HARZ

ARTICLE MOULÉ D'UNE RÉSINE THERMOCONDUCTRICE ET PROCÉDÉ DE FABRICATION D'UN ARTICLE MOULÉ DE RÉSINE THERMOCONDUCTRICE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.03.2012 JP 2012050320**

(43) Date of publication of application:
**14.01.2015 Bulletin 2015/03**

(73) Proprietor: **Kaneka Corporation**
**Osaka-shi, Osaka 530-8288 (JP)**

(72) Inventors:
- **YOSHIHARA, Shusuke**
**Settsu-shi**
**Osaka 566-0072 (JP)**
- **EZAKI, Toshiaki**
**Settsu-shi**
**Osaka 566-0072 (JP)**
- **NAKAMURA, Mitsuru**
**Settsu-shi**
**Osaka 566-0072 (JP)**

(74) Representative: **Vossius & Partner**
**Patentanwälte Rechtsanwälte mbB**
**Siebertstrasse 3**
**81675 München (DE)**

(56) References cited:
**WO-A1-2011/132389** **WO-A1-2011/132389**
**JP-A- 2004 051 852** **JP-A- 2004 149 722**
**JP-A- 2008 075 063** **JP-A- 2012 040 811**
**JP-A- 2013 028 661**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 824 131 B1

**Description**

Technical Field

The present invention relates to a resin molded article excellent in thermal conductivity and a method for producing the resin molded article.

Background Art

When a resin composition is applied to various uses such as housings of a personal computer and a display device, an electronic device material, and automotive exterior and interior parts, there may occur a problem that dissipation of generated heat is difficult because of a lower thermal conductivity of plastic as compared to a thermal conductivity of an inorganic substance such as a metal material. In order to solve this problem, it has been generally attempted to obtain a highly thermally conductive resin composition by mixing a large amount of thermally conductive filler in a resin. Examples of such a thermally conductive filler include graphite, carbon fiber, alumina, and boron nitride. It is necessary to mix such a thermally conductive filler in a resin so that a resultant resin composition has a high content (as high as typically 30% or more by volume or further, as high as 50% or more by volume) of the thermally conductive filler. However, even when a large amount of filler is mixed, an improvement in thermal conductivity of the resin composition has been limited because of a low thermal conductivity of the resin by itself. Accordingly, there has been a demand for improvement of thermal conductivity of resin by itself.

In connection with obtaining a higher thermal conductivity of resin, Patent Literature 1 discloses a resin molded article having a high thermal conductivity in a direction in which thermal liquid crystal polyester is oriented. According to Patent Literature 1, such a resin molded article is obtained by orienting the thermal liquid crystal polyester by at least one external field selected from a flow field, a shear field, a magnetic field, and an electric field. In the case of the magnetic field, 3 teslas or more of magnetic flux density is required to obtain a desired thermal conductivity of the resin molded article. This makes it difficult to produce the resin molded article. Further, according to the method of Patent Literature 1, a thermally conductive filler in a plate form, a spheroidal form, or a fiber form is also oriented in the same direction as the thermal liquid crystal polyester. This makes it difficult to obtain a higher thermal conductivity in a direction perpendicular to the direction in which the thermally conductive filler and the thermal liquid crystal polyester are oriented.

There have been few reports on studies of a resin which is not subjected to a special molding process such as extension or magnetic field orientation but which by itself has a high thermal conductivity. As an example of such a resin in the few reports, there is a thermoplastic resin disclosed in Patent Literature 2. This thermoplastic resin has been found by the inventor of the present application and another. Patent Literature 2 discloses that, when a ratio of lamellar crystals in the thermoplastic resin is increased, the thermoplastic resin exhibits a high thermal conductivity. However, the thermoplastic resin of Patent Literature 2 has a problem that the thermal conductivity of the thermoplastic resin varies depending on a production method, a molding method, etc., and an optimal high-order structure and a control method of this high-order structure have not been figured out.

Patent Literature 3 discloses a thermoplastic resin wherein a main chain which mainly has a repeating unit represented by $-A^1-x-A^2-y-R-z-$; 60 mol% or more ends of molecular chains are carboxyl groups; and thermal conductivity of the thermoplastic resin itself is not less than 0.45·W/(m·K), wherein a mesogenic group M corresponding to $-A^1-x-A^2-$ of the thermoplastic resin is a mesogenic group expressed by the following general formula

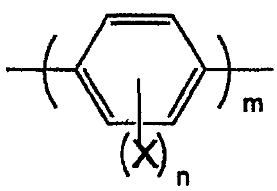
,

where: X represents independently aliphatic hydrocarbon group, F, Cl, Br, I, CN, or $NO_2$; n is an integer from 0 to 4; m is an integer from 2 to 4; each of y, and z independently represents a direct bond, or a bivalent substituent group selected from the group consisting of $-CH_2-$, $-C(CH_3)_2-$, -O-, -S-, $-CH_2-CH_2-$, -CH=CH-, -C=C-, -CO-, -CO-O-, -CO-NH-, -CH=N-, -CH=N-N=CH-, -N=N-, and -N(O)=N-; and R represents a bivalent substituent group which has a main chain length of 2 to 20 atoms and may be branched. Patent Literature 3 further discloses a thermoplastic resin composition comprising the thermoplastic resin and a thermally conductive filler.

As an example where molecules or molecular chains are oriented in a direction perpendicular to a flow direction or a shear direction, a smectic liquid crystal low-molecular compound and a smectic liquid crystal polymer are known

as disclosed in Non-Patent Literature 1 or 2. Further, a lot of studies including Non-Patent Literatures 4 and 5 have been made so far on a smectic liquid crystal polymer that is one
of liquid crystal polymers. The smectic liquid crystal polymer is obtained by polymerization of 4,4'-biphenol and aliphatic dicarboxylic acid as monomers. This smectic liquid crystal polymer has been reported as a high crystallinity polymer. However, none of Non-Patent Literatures 1 to 5 mentioned above discloses anything about a thermal conductivity of the smectic liquid crystal polymer and about mixing a thermally conductive filler.

Citation List

Patent Literatures

Patent Literature 1
Japanese Patent Application Publication, *Tokukai*, No. 2008-150525
Patent Literature 2
International Publication No. WO2010/050202

Non-Patent Literatures

Non-Patent Literature 1
Phiysical Review, 45, 994 - 1008 (1992)
Non-Patent Literature 2
Macromolecules, 37, 2527 - 2531 (2004).
Non-Patent Literature 3
Journal of Polymer Science Polymer Physics Edition, 21, 1119 - 1131 (1983)
Non-Patent Literature 4
Macromolecules, 16, 1271 - 1279 (1983)
Patent Literature 3
International Publication No. WO 2011/132389 A1
Non-Patent Literature 5 Macromolecules, 17, 2288 - 2295 (1984)

Summary of Invention

Technical Problem

An object of the present invention is to provide a resin molded article excellent in thermal conductivity and a method of producing the resin molded article.

Solution to Problem

As a result of diligent studies made by the inventors of the present invention, the inventors of the present invention have found, in regard to a resin molded article containing at least a resin and an inorganic filler in a plate form, a spheroidal form or a fiber form, a method that makes it possible to orient resin molecular chains in a thickness direction of the resin molded article and a long axis of the inorganic filler in an in-plane direction of the resin molded article. As a result, the inventors of the present invention also have found that thermal conductivities in both the thickness direction and the in-plane direction of the resin molded article can be improved, and consequently have achieved the present invention, as defined in the appended claims.

Disclosed herein is a resin molded article including at least a resin and
an inorganic filler that is in a plate form, a spheroidal form, or a fiber form, in a region corresponding to 50% or more of a volume of the resin molded article, the resin having resin molecular chains oriented in a thickness direction of the resin molded article and the inorganic filler having a long axis oriented in an in-plane direction of the resin molded article, the resin molecular chains having an orientation degree $\alpha$ in a range of 0.6 or more and less than 1.0, the orientation degree being calculated by the following Formula (1), from a half-value width W obtained by wide-angle X-ray scattering measurement:

$$\text{orientation degree } \alpha = (360° - \Sigma W)/360° \ldots (1),$$

wherein W is a half-value width of a scattering peak between the resin molecular chains, in an intensity distribution in directions of azimuth angles in a range of 0° to 360° in the wide-angle X-ray scattering measurement.

Advantageous Effects of Invention

According to the present invention, a resin molded article excellent in thermal conductivity can be obtained.

Brief Description of Drawings

Fig. 1 is a view showing a wide-angle X-ray scattering profile of a resin molded article of Example 1.
Fig. 2 is a view showing an intensity distribution at azimuth angles in an (ND, TD) pattern of a resin molded article of Example 1.
Fig. 3 is a view showing a wide-angle X-ray scattering profile of a resin molded article of Comparative Example 1.
Fig. 4 is a view showing a wide-angle X-ray scattering profile of a resin molded article of Comparative Example 2.

Description of the present disclosure.

A resin molded article of the present disclosure includes at least a resin and an inorganic filler that is in a plate form, a spheroidal form, or a fiber form, in a region of 50% or more of a volume of the resin molded article, the resin having resin molecular chains oriented in a thickness direction of the resin molded article and the inorganic filler having a long axis oriented in an in-plane direction of the resin molded article, the resin molecular chains having an orientation degree $\alpha$ in a range of 0.6 or more and less than 1.0, the orientation degree being calculated by the following Formula (1), from a half-value width W obtained by wide-angle X-ray scattering measurement:

$$\text{orientation degree } \alpha = (360° - \Sigma W)/360° \ldots (1),$$

wherein W is a half-value width of a scattering peak between the resin molecular chains, in an intensity distribution in directions of azimuth angles in a range of 0° to 360° in the wide-angle X-ray scattering measurement.

By wide-angle X-ray scattering measurement (transmission) of the resin molded article, orientation of resin molecular chains in the thickness direction is checked and an orientation degree $\alpha$ of the resin molecular chains in the thickness direction is obtained. The orientation degree $\alpha$ is obtained as follows. That is, first, a resin molded article portion to be measured is placed in an xyz space and irradiated with an x-ray beam whose beam size is 1 mm. This irradiation is carried out from three directions of x, y, and z, with respect to a center of the resin molded article portion to be measured, so that the x-ray beam is transmitted through the resin molded article portion. In a case where the resin molecular chains are oriented in the thickness direction of the resin molded article, a scattering peak is observed at an azimuth angle in the in-plane direction at an angle close to $2\theta$ = 20 degrees, in two measurement results obtained by irradiation with x-ray parallel to the in-plane direction. Meanwhile, in a case where the resin molecular chains are in a non-oriented state, a scattering peak is observed, like a ring, at azimuth angles of 360 degrees all around. The peak observed at a position at an angle close to $2\theta$ = 20 degrees indicates a distance between resin molecular chains. A value of $2\theta$ may be a value in a range of 15 degrees to 30 degrees, depending on a polymer structure and/or mixed constituent materials of a resin composition. In a case where an intensity is measured in directions of azimuth angles from 0 degrees to 360 degrees while the value of $2\theta$ is fixed, an intensity distribution in the directions of the azimuth angles is obtained. In this intensity distribution in the directions of the azimuth angles, a width (half-value width W) at a position where a height is a half of a height at the peak is obtained. This half-value width W is substituted into the above Formula (1) and thereby, an orientation degree $\alpha$ is calculated. In Formula (1), $\Sigma W$ indicates the sum of respective half-value widths W of a plurality of peaks in the intensity distribution in the directions of the azimuth angles. The orientation degree $\alpha$ of the resin molecular chains of the resin molded article of the present disclosure in the thickness direction is in a range of 0.6 or more and less than 1.0, more preferably in a range of 0.65 or more and less than 1.0, and further more preferably, 0.7 or more and less than 1.0. In a case where the orientation degree $\alpha$ is less than 0.6, a thermal conductivity of the resin molded article becomes low.

In the present disclosure, an "orientation direction of a long axis of an inorganic filler" is a direction of a long diameter specified as follows. That is, the long diameter is the longest diameter of a cross section of an inorganic filler which is specified in an observable direction in observation of a cross section in the in-plane direction of the resin molded article with use of an SEM (scanning electron microscope). In the present invention, "the inorganic filler having a long

axis oriented in an in-plane direction of the resin molded article" can be checked as an orientation degree of the inorganic filler in the in-plane direction. This check is possible by wide-angle X-ray scattering measurement (transmission) as in the above method of checking the orientation of the resin molecular chains in the thickness direction, in the case of a resin molded article containing an inorganic filler, like graphite or boron nitride, having a crystal structure including a periodic layer structure. The orientation degree in this case is also in a range of 0.6 or more and less than 1.0, more preferably in a range of 0.65 or more and less than 1.0, and further more preferably in a range of 0.7 or more and less than 1.0. In a case where the orientation of the inorganic filler cannot be identified clearly in X-ray scattering, a cross section of the in-plain direction of the resin molded article is observed by use of a SEM (scanning electron microscope). Then, randomly selected 50 inorganic fillers are measured in a direction where these inorganic fillers are observable. In this measurement, an angle (in a case where the angle is 90 degrees or more, a supplementary angle is used) of each long axis relative to the thickness direction of the resin molded article is measured. Further, "orientation of the long axis of the inorganic filler" is defined as a state where an average value of thus measured angles is in a range of 60 degrees to 90 degrees. In order that thermal conductivities are simultaneously improved in both the thickness direction and the planar direction of the resin molded article, a relation where orientation of the resin molecular chains and orientation of the inorganic fillers that are observed by the above method are perpendicular to each other is achieved in a portion of preferably 50% or more, more preferably 60% or more, and further more preferably 70% or more of a total volume of the resin molded article.

The resin molded article of the present disclosure is preferably arranged such that 50% or more of a volume of the resin molded article has a thickness of 1.5 mm or less. This is because a smaller wall thickness of the resin molded article more easily achieves the above orientation of the resin molecular chain and the inorganic filler. A volume fraction of the resin molded article is preferably 50% or more, more preferably 60% or more, further more preferably 70% or more, and most preferably 80% or more. The thickness of the resin molded article is preferably 1.5 mm or less, more preferably 1.2 mm or less, and further more preferably 1 mm or less. In a case where the thickness of the resin molded article becomes greater than 1.5 mm, a noticeable difference may occur in orientation state of the resin molecular chains or the inorganic filler between a surface part and a center part (core part) in the thickness direction of the resin molded article. Further, in consideration of the fact that an X-ray beam size in wide-angle X-ray scattering measurement is 1 mm, it is preferable to carry out evaluations separately for the center part in the thickness direction and the surface part in a case where a resin molded article having a thickness of more than 1 mm is to be evaluated with an x-ray. In such a case, a boundary between the center part in the thickness direction and the surface part is defined as a boundary where an average value of measured angles (a supplementary angle is used in a case where any of the angles is over 90 degrees) of long axes of the inorganic fillers relative to the thickness direction of the resin molded article changes across a 60-degree border. Here, the angles are measured in SEM observation. As a result of such evaluation of the orientations of the resin molecular chains and the inorganic fillers as described above, the resin molded article of the present disclosure is arranged such that in a region of 50% or more of a volume of the resin molded article, the resin molecular chains are oriented in the thickness direction of the resin molded article while the long axis of the inorganic filler is oriented in the in-plane direction of the resin molded article.

The resin in the resin molded article of the present disclosure preferably exhibits a smectic liquid crystal phase when heated. This is because in such a resin, molecules or molecular chains are easily oriented in the thickness direction of the resin molded article. A resin exhibiting a liquid crystal phase is a generic term for resins that exhibit a liquid crystal phase at a certain temperature or above when heated. Typical types of liquid crystals include a nematic liquid crystal and a smectic liquid crystal. The nematic liquid crystal has constituent molecules that have an orientation order but that does not have a three dimensional positional order. Meanwhile, the smectic liquid crystal has a layer structure where molecules are aligned continuously so that molecular axes of the molecules are substantially parallel to one another. Further, in the layer structure, molecules in a portion where the molecules are aligned continuously so as to have molecular axes substantially parallel to one another have respective centroids in one plane. For example, when nematic liquid crystal molecules or smectic liquid crystal molecules in a liquid crystal state are placed in a shear flow field, the nematic liquid crystal molecules are known to be oriented in a shear flow direction. Meanwhile, in such a case, the smectic liquid crystal molecules are known to be oriented in a direction perpendicular to a flow plane because the layer structure of the smectic liquid crystal is oriented in the shear flow direction. The smectic liquid crystal is also known to exhibit a specific pattern such as a short-rods-like (batonets) texture, a mosaic texture, or a fan-like texture in microscope observation under linearly polarized light. Generally, in a temperature rise process, the smectic liquid crystal molecules or polymer exhibits, as thermophysical properties, a transition point (hereinafter, denoted by $T_s$) from a solid phase to a smectic liquid crystal phase and a transition point (hereinafter, denoted by $T_i$) from the smectic liquid crystal phase to an isotropic phase. Depending on a substance of which the smectic liquid crystal molecules or polymer is made, the smectic liquid crystal molecules or polymer may exhibit a transition point (hereinafter, denoted by $T_N$) from the smectic liquid crystal phase to the nematic liquid crystal phase at a temperature that is lower than $T_i$. These phase transition points can be observed as peak tops of endothermic peaks in a temperature rise process in DSC measurement.

In the present disclosure, a number average molecular weight means a value measured at a column temperature

of 80°C in a high-temperature GPC (Viscotek:350 HT-GPC System) by use of a differential refractometer (RI) as a detector. In measurement of the number average molecular weight, polystyrene is used as a reference material and the number average molecular weight is measured by using a solution that is prepared by dissolving the resin of the present disclosure in a mixed solvent of p-chlorophenol and toluene at a volume ratio of 3:8 so that a concentration of the resin of the present disclosure becomes 0.25% by weight. The number average molecular weight of the resin of the present disclosure is preferably in a range of 3000 to 40000, and in consideration of an upper limit, more preferably in a range of 3000 to 30000 and particularly preferably in a range of 3000 to 20000. Meanwhile, in consideration of a lower limit, the number average molecular weight is preferably in a range of 3000 to 40000, more preferably in a range of 5000 to 40000, and particularly preferably in a range of 7000 to 40000. Furthermore, in consideration of both the upper limit and the lower limit, the number average molecular weight is more preferably in a range of 5000 to 30000, and most preferably in a range of 7000 to 20000. In a case where the number average molecular weight is less than 3000, a mechanical strength for the resin molded article may become low. Meanwhile, in a case where the number average molecular weight is larger than 40000, an orientation degree of the resin molecular chains in the thickness direction may become less than 0.6.

Preferably, the resin in the resin molded article of the present disclosure is mainly made of a repeating unit represented by the following General Formula (2):

$$-A^1\text{-x-}A^2\text{-OCO}(CH_2)_m\text{COO- ...} \qquad (2),$$

wherein $A^1$ and $A^2$ each are independently a substituent group selected from the group consisting of an aromatic group, a condensed aromatic group, an alicyclic group, and an alicyclic heterocyclic group; x is a direct bond, or a bivalent substituent group selected from the group consisting of -O-, -S-, $-CH_2-CH_2-$, -C=C-, -C=C(Me)-, -C≡C-, -CO-O-, -CO-NH-, -CH=N-, -CH=N-N=CH-, -N=N- and - N(O)=N-; and m is an integer in a range of 2 to 20.

Here, the wording "mainly made of" means that an amount of a structure represented by General Formula (2) in a main chain of a resin molecular chain with respect to a total constituent unit of the resin is 50 mol% or more, preferably 70 mol% or more, more preferably 90 mol% or more, and most preferably substantially 100 mol%. In a case where the amount of the structure is less than 50 mol%, the resin may not exhibit a high thermal conductivity due to disarray of a molecular structure. The structure of the resin represented by General Formula (2) is characterized by having a rod-like rigid mesogenic group and a flexible group in its molecule. In General Formula (2), $-A^1$-x-$A^2$-corresponds to the mesogenic group, while $-(CH_2)_m$-corresponds to the flexible group.

In General Formula (2), preferably, each of $A^1$ and $A^2$ is independently selected from a C6-12 hydrocarbon group containing a benzene ring , a C10-20 hydrocarbon group containing a naphthalene ring, a C12-24 hydrocarbon group containing a biphenyl structure, a C12-36 hydrocarbon group containing three or more benzene rings, a C12-36 hydrocarbon group containing a condensed aromatic group, and a C4-36 alicyclic heterocyclic group .

Specific Examples of $A^1$ and $A^2$ include: phenylene, biphenylene, naphthylene, anthracenylene, cyclohexyl, pyridyl, pyrimidyl, and thiophenylene. $A^1$ and $A^2$ can be non-substituent or a derivative which contains a substituent group such as an aliphatic hydrocarbon group, a halogen group, a cyano group, or a nitro group. x is a connector and represents a direct bond, or a bivalent substituent group selected from the group consisting of -O-, -S-, $-CH_2-CH_2-$, - C=C-, -C=C(Me)-, -C≡C-, -CO-O-, -CO-NH-, -CH=N-, -CH=N-N=CH-, -N=N- and -N(O)=N-. Of these bivalent substituent groups, a bivalent substituent group is preferable in which x, which corresponds to the connector, has a main chain length of even-numbered atoms. Namely, a bivalent substituent group is preferably a direct bond, a bivalent substituent group selected from a group consisting of $CH_2-CH_2-$, -C=C-, - C=C(Me)-, -C≡C-, -CO-O-, -CO-NH-, -CH=N-, -CH=N-N=CH-, -N=N- and -N(O)=N-. In a case where x has a main chain length of odd-numbered atoms, the resin may not exhibit a liquid crystal phase due to flexibility resulting from an increase in molecular width of the mesogenic group and an increase in degree of freedom of bond rotation.

Specific examples of such a preferable mesogenic group include: biphenyl, terphenyl, quarterphenyl, stilbene, diphenyl ether, 1,2-diphenylethylene, diphenylacetylene, phenylbenzoate, phenylbenzamide, azobenzene, 2-naphtoate, phenyl-2-naphtoate, and bivalent groups which have a structure in which two hydrogens are removed from a derivative or the like of such a mesogenic group as mentioned above. However, the preferable mesogenic group is not limited to these.

Further, $-A^1$x-$A^2$- corresponding to a mesogenic group of a liquid crystal polymer is preferably represented by the following General Formula (3). Such mesogenic groups are rigid and highly-oriented due to their structure, and can also be easily available or synthesized.

[Chem. 1]

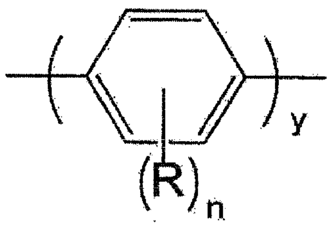

... (3),

wherein each R is independently an aliphatic hydrocarbon group, F, Cl, Br, I, CN, or $NO_2$; y is an integer in a range of 2 to 4; and n is an integer in a range of 0 to 4.

In General Formula (2), m is preferably an even number in a range of 4 to 14, more preferably an even number in a range of 6 to 12, and particularly preferably an even number of 8, 10, or 12, because the resin having the structure represented by General Formula 2 where m is such a number exhibits a higher thermal conductivity.

The resin having the above-described structure may be prepared by any publicly-known method. For simple and easy structural control, the resin is preferably produced by reacting a compound in which the flexible group has carboxyl groups at both ends thereof with a compound in which the mesogenic group has hydroxyl groups at both ends thereof. In this case, the resin is a chain-polymer resin.

The following explains one example of the method of producing the resin which contains the compound in which the mesogenic group has hydroxyl groups at both ends thereof and the compound in which the flexible group has carboxyl groups at both ends thereof. According to the method, the mesogenic group which has hydroxyl groups at both ends thereof is reacted with a lower fatty acid such as acetic anhydride, thereby converting the mesogenic group to acetate ester individually or at one time. Thereafter, the resultant acetate ester is subjected to a polycondensation reaction for acetic acid elimination with the compound in which the flexible group has carboxyl groups at both ends thereof. The reaction for converting the hydroxyl groups to acetate ester and the following polycondensation reaction may be carried out in one reaction vessel or in different reaction vessels. The polymerization reaction is carried out substantially in the presence of no solvent, generally at a temperature in a range of 230°C to 350°C, and preferably at a temperature in a range of 250°C to 330°C, in the presence of an inert gas such as nitrogen, under an ordinary pressure or under a reduced pressure, for 0.5 hour to 5 hours. The reaction progresses slowly at a reaction temperature lower than 230°C, whereas a side reaction such as degradation is likely to occur at a reaction temperature higher than 350°C. In a case where the reaction is carried out under a reduced pressure, preferably, a degree of reduced pressure is increased stepwise. In a case where the pressure is reduced abruptly to a high degree of vacuum, monomers may vaporize. The reached degree of vacuum is preferably 100 Torr or lower, more preferably 50 Torr or lower, and particularly preferably 10 Torr or lower. In a case where the degree of vacuum is over 100 Torr, the polymerization reaction may take a long time. Further, multiple-level reaction temperatures can be employed. According to circumstances, a reaction product may be taken out and collected in its molten state while the reaction temperature is increasing or immediately after the reaction temperature reaches the maximum temperature.

Examples of an acid anhydride of a lower fatty acid which acid anhydride is used in the polymerization step include: acid anhydrides of C2-5 lower fatty acids, such as acetic anhydride, propionic acid anhydride, monochloroacetic acid anhydride, dichloroacetic acid anhydride, trichloroacetic acid anhydride, monobromoacetic acid anhydride, dibromoacetic acid anhydride, tribromoacetic acid anhydride, monofluoroacetic acid anhydride, difluoroacetic acid anhydride, trifluoroacetic acid anhydride, butyric anhydride, isobutyric acid anhydride, valeric acid anhydride, and pivalic acid anhydride. In particular, acetic anhydride, propionic acid anhydride, and trichloroacetic acid anhydride are preferably used. An acid anhydride of a lower fatty acid is used in an equivalent weight of 1.01 time to 1.50 time, and preferably of 1.02 time to 1.2 time with respect to a total amount of hydroxyl groups contained in the mesogenic group employed.

The resin of the present invention may be copolymerized with another monomer, provided that the resin still can yield its effect. Examples of the another monomer include: aromatic hydroxycarboxylic acid, aromatic dicarboxylic acid, aromatic diol, aromatic hydroxylamine, aromatic diamine, aromatic aminocarboxylic acid, caprolactams, caprolactones, aliphatic dicarboxylic acid, aliphatic diol, aliphatic diamine, alicyclic dicarboxylic acid, alicyclic diol, aromatic mercaptocarboxylic acid, aromatic dithiol, and aromatic mercaptophenol. According to the present invention, an amount of the another monomer added is typically less than 50% by weight, preferably 30% by weight or less, and more preferably 10% by weight or less.

Specific examples of the aromatic hydroxycarboxylic acid include: 4-hydroxybenzoic acid, 3-hydroxybenzoic acid, 2-hydroxybenzoic acid, 2-hydroxy-6-naphthoic acid, 2-hydroxy-5-naphthoic acid, 2-hydroxy-7-naphthoic acid, 2-hydroxy-3-naphthoic acid, 4'-hydroxyphenyl-4-benzoic acid, 3'-hydroxyphenyl-4-benzoic acid, and 4'-hydroxyphenyl-3-benzoic acid, each of which may or may not be substituted with an alkyl, alkoxy, or halogen.

Specific examples of the aromatic dicarboxylic acid include: terephthalic acid, isophthalic acid, 2,6-naphthalenedicarboxylic acid, 1,6-naphthalenedicarboxylic acid, 2,7-naphthalenedicarboxylic acid, 4,4'-dicarboxybiphenyl, 3,4'-dicarboxybiphenyl, 4,4''-dicarboxyterphenyl, bis(4-carboxyphenyl)ether, bis(4-carboxyphenoxy)butane, bis(4-carboxyphenyl)ethane, bis(3-carboxyphenyl)ether, and bis(3-carboxyphenyl)ethane, each of which may or may not be substituted with an alkyl, alkoxy, or halogen.

Specific examples of the aromatic diol include: hydroquinone, catechol, resorcin, 2,6-dihydroxynaphthalene, 2,7-dihydroxynaphthalene, 1,6-dihydroxynaphthalene, 3,3'-dihydroxybiphenyl, 3,4'-dihydroxybiphenyl, 4,4'-dihydroxybiphenyl, 4,4'-dihydroxybiphenol ester, bis(4-hydroxyphenyl)ethane, and 2,2'-dihydroxybinaphthyl, each of which may or may not be substituted with an alkyl, alkoxy, or halogen.

Specific examples of the aromatic hydroxylamine include: 4-aminophenol, N-methyl-4-aminophenol, 3-aminophenol, 3-methyl-4-aminophenol, 4-amino-1-naphthol, 4-amino-4'-hydroxybiphenyl, 4-amino-4'-hydroxybiphenyl ether, 4-amino-4'-hydroxybiphenyl methane, 4-amino-4'-hydroxybiphenyl sulfide, and 2,2'-diaminobinaphthyl, each of which may or may not be substituted with an alkyl, alkoxy, or halogen.

Specific examples of the aromatic diamine and the aromatic aminocarboxylic acid include: 1,4-phenylenediamine, 1,3-phenylenediamine, N-methyl-1,4-phenylenediamine, N,N'-dimethyl-1,4-phenylenediamine, 4,4'-diaminophenyl sulfide (thiodianiline), 4,4'-diaminobiphenyl sulfone, 2,5-diaminotoluene, 4,4'-ethylenedianiline, 4,4'-diaminobiphenoxyethane, 4,4'-diaminobiphenyl methane (methylenedianiline), 4,4'-diaminobiphenyl ether (oxydianiline), 4-aminobenzoic acid, 3-aminobenzoic acid, 6-amino-2-naphthoic acid, and 7-amino-2-naphthoic acid, each of which may or may not be substituted with an alkyl, alkoxy, or halogen.

Specific examples of the caprolactams include ε-caprolactam. Meanwhile, specific examples of the caprolactones include ε-caprolactone.

Specific examples of the aliphatic dicarboxylic acid include: oxalic acid, malonic acid, succinic acid, glutaric acid, adipic acid, pimelic acid, suberic acid, azelaic acid, sebacic acid, dodecanedioic acid, tetradecanedioic acid, fumaric acid, and maleic acid.

Specific examples of the aliphatic diamine include: 1,2-ethylenediamine, 1,3-trimethylenediamine, 1,4-tetramethylenediamine, 1,6-hexamethylenediamine, 1,8-octanediamine, 1,9-nonanediamine, 1,10-decanediamine, and 1,12-dodecanediamine.

Specific examples of the alicyclic dicarboxylic acid, the aliphatic diol, and the alicyclic diol include: hexahydroterephthalic acid, linear or branched aliphatic diols such as trans-1,4-cyclohexanediol, cis-1,4-cyclohexanediol, trans-1,4-cyclohexanedimethanol, cis-1,4-cyclohexanedimethanol, trans-1,3-cyclohexanediol, cis-1,2-cyclohexanediol, trans-1,3-cyclohexanedimethanol, ethylene glycol, propylene glycol, butylene glycol, 1,3-propanediol, 1,2-propanediol, 1,4-butanediol, 1,6-hexanediol, 1,8-octanediol, 1,10-decanediol, 1,12-dodecanediol, neopentyl glycol, and the like, and reactive derivatives thereof.

Specific examples of the aromatic mercaptocarboxylic acid, the aromatic dithiol, and the aromatic mercaptophenol include: 4-mercaptobenzoic acid, 2-mercapto-6-naphthoic acid, 2-mercapto-7-naphthoic acid, benzene-1,4-dithiol, benzene-1,3-dithiol, 2,6-naphthalene-dithiol, 2,7-naphthalene-dithiol, 4-mercaptophenol, 3-mercaptophenol, 6-mercapto-2-hydroxynaphthalene, 7-mercapto-2-hydroxynaphthalene, and the like, and reactive derivatives of these compounds.

The amount of the inorganic filler in the resin molded article of the present invention in volume ratio of the resin and the inorganic filler is preferably in a range of 90:10 to 30:70, more preferably in a range of 80:20 to 40:60, and particularly preferably in a range of 70:30 to 50:50. In a case where the volume ratio of the resin and the inorganic filler is in a range of 100:0 to 90:10, a sufficient thermal conductivity may not be obtained. In a case where the volume ratio of the resin and the inorganic filler is in a range of 30:70 to 0:100, a mechanical property may deteriorate. In a case where the amount of the inorganic filler is as small as the amount in a range of 90:10 to 70:30 in volume ratio of the resin and the inorganic filler, the resin molded article has an excellent thermal conductivity because the resin of the present invention serves as a thermally conductive path among inorganic fillers. At the same time, in such a case, the density of the resin molded article can be decreased because the amount of the inorganic filler used is small. The resin molded article having an excellent thermal conductivity and a small density is advantageous for use as a heat dissipating or heat transmitting resin material in various situations, for example, in various fields of electric, electronic, and automotive industries.

A publicly-known inorganic filler can be extensively used as the inorganic filler. A thermal conductivity of the inorganic filler by itself is not particularly limited. The inorganic filler by itself has a thermal conductivity preferably of 0.5 W/m·K or more, and more preferably of 1 W/m·K or more. From the viewpoint of excellence in thermal conductivity of a resin molded article to be obtained, it is particularly preferable that the inorganic filler be a thermally conductive filler which by itself has a thermal conductivity of 2 W/m·K or more.

A publicly-known filler can be extensively used as the thermally conductive filler. The thermally conductive filler

is used which by itself has a thermal conductivity preferably of 2 W/m·K or more, more preferably of 10 W/m·K or more, most preferably of 20 W/m·K or more, and particularly preferably of 30 W/m·K or more. An upper limit of the thermal conductivity of the thermally conductive filler by itself is not particularly limited. It is preferable that the thermally conductive filler by itself have a thermal conductivity as high as possible. However, the thermally conductive filler is generally used which by itself has a thermal conductivity of 3000 W/m·K or less, or further of 2500 W/m·K or less.

In a case where the resin molded article of the present invention is used for an application that does not particularly require an electric insulation property, the inorganic filler in a plate form or a spheroidal form is preferably made of at least one kind of inorganic compound selected from the group consisting of graphite, conductive metal powder, soft magnetic ferrite, zinc oxide, and metal silicon. This is because such an inorganic compound has an excellent thermal conductivity.

In a case where the resin molded article of the present invention is used for an application that requires an electric insulation property, specific examples of a compound which exhibits an electric insulation property among inorganic fillers and of which the inorganic filler is made include: metal oxides such as talc, aluminum oxide, magnesium oxide, silicon oxide, beryllium oxide, copper oxide, and cuprous oxide; metal nitrides such as boron nitride, aluminum nitride, and silicon nitride; metal carbides such as silicon carbide; metal carbonates such as magnesium carbonate; insulating carbon materials such as diamond; and metal hydroxides such as aluminum hydroxide and magnesium hydroxide. In particular, the inorganic filler in a plate form or a spheroidal form is preferably made of at least one kind of inorganic compound selected from the group consisting of talc, boron nitride, aluminum oxide, and mica, because these compounds are easily available.

Further, in a case where an inorganic filler in a fiber form is used, the inorganic filler is preferably made of at least one kind of compound selected from the group consisting of carbon fiber, glass fiber, carbon nanotube, and wollastonite.

These inorganic fillers can be used alone or in combination of two or more kinds which are different in shape, average particle size, kind, surface treatment agent, and/or the like.

These inorganic fillers can be subjected to a surface treatment carried out by use of various surface treatment agents such as a silane treatment agent so that the inorganic fillers have a higher adhesiveness at an interface between the resin and the inorganic filler and easier workability. The surface treatment agents are not particularly limited, and conventionally publicly-known surface treatment agents such as a silane coupling agent and a titanate coupling agent are usable. In particular, a silane coupling agent containing an epoxy group such as epoxy silane, a silane coupling agent containing an amino group such as aminosilane, and a polyoxyethylene silane coupling agent are preferable because they are less likely to cause a deterioration in properties of a resin. A method for carrying out the surface treatment with respect to the inorganic filler is not particularly limited, and a general surface treatment method can be employed.

Publicly-known fillers in addition to the above inorganic fillers can be extensively used for the resin molded article of the present invention according to need. Examples of a filler other than the inorganic filler include: diatomite powder; calcined clay; micronized silica; quartz powder; crystalline silica; kaolin; antimony trioxide; molybdenum disulfide; rock wool; ceramic fiber; inorganic fiber such as asbestos; and glass fillers such as glass fiber, glass powder, glass cloth, and molten silica. Use of such a filler allows an increase in preferable property such as thermal conductivity, mechanical strength, or abrasion resistance which is suitable for practical use of a resin composition. Further, according to need, an organic filler such as paper, pulp, and wood material; synthetic fibers such as polyamide fiber, aramid fiber, and boron fiber; and resin powder such as polyolefin powder can be mixed in combination.

Further, according to need, provided that an effect of the present invention can be yielded, any other component such as a reinforcer, a thickener, a mold release agent, a coupling agent, a flame retarder, a flame-resistant agent, a pigment, a coloring agent, and other auxiliary agents can be added to the resin molded article of the present invention as an additive other than the resin and the filler which are mentioned above. The amount of such an additive in total is preferably 0 part by weight to 20 parts by weight and more preferably in 0.1 part by weight to 15 parts by weight, with respect to 100 parts by weight of the resin.

A method of mixing a substance to be mixed in the resin is not particularly limited. For example, a mixture can be produced by drying the above-mentioned component or additive and then subjecting the dried component or additive to melt-kneading by use of a melt-kneading machine such as a single screw extruder or a double screw extruder. Meanwhile, in a case where a component to be mixed is liquid, a mixture can be produced by adding, in the middle of the melt-kneading, the liquid into the melt-kneading machine by use of a liquid supply pump or the like.

The resin molded article of the present invention can be molded by any of various resin molding methods such as injection molding, extrusion molding, press molding, and blow molding.

For convenience in production, in the method of producing the resin molded article of the present invention, preferably, the resin molecular chains are oriented in the thickness direction of the resin molded article by the shear flow field while the long axis of the inorganic filler is oriented in the in-plane direction of the resin molded article by the shear flow field. In order that the resin molecular chains are oriented in the thickness direction by the shear flow field, it is

preferable that the resin in a smectic liquid crystal state is placed in the shear flow field. A simple method for utilizing the shear flow field is, for example, an injection molding method. The injection molding method is a molding method according to which: an injection molding machine is equipped with a mold; a resin composition which has been melted and plasticized is injected into the mold at a high speed and cooled to be solidified in the injection molding machine; and a resultant molded article is taken out. More specifically, a resin is heated so as to be a smectic liquid crystal state, and then injected into the mold. Here, a temperature of the mold is set preferably at $T_m$-100°C or higher, more preferably at $T_m$-80°C or higher, and further more preferably at $T_m$-50°C or higher so that the resin molecular chains are highly oriented.

The resin molded article of the present invention can be extensively used for various applications such as an electronic material, a magnetic material, a catalytic material, a structure material, an optical material, a medical material, an automotive material, and an architectural material. The resin molded article of the present invention is very useful as a heat dissipating or heat transmitting resin material because the resin molded article has excellent properties such as particularly superior molding workability and a high thermal conductivity.

The resin molded article of the present invention can be suitably applied to, for example, injection molded articles such as electric appliances, OA equipment parts, AV equipment parts, and automotive exterior and interior parts. The resin molded article of the present invention can be suitably used as an exterior material particularly for electric appliances and OA equipment in each of which a large amount of heat is generated. Further, in an electronic device in which a heat source is present but forced cooling by a fan or the like is difficult, the resin molded article of the present invention can suitably used as an exterior material of such an electronic device so that heat generated inside the electronic device is dissipated to outside the electronic device. In particular, the resin molded article of the present invention is extremely useful as a resin preferably for heat dissipating parts of LED illumination lamps, and chassis, housings, or external materials of small-sized or portable electronic devices including a PDA, a mobile phone, a portable game machine, a portable music player, a portable TV/video device, a portable video camera, and a portable computer such as a laptop personal computer. Further, the resin molded article of the present invention is also extremely useful as a resin surrounding a battery in an automobile, an electric train, and the like, a resin for portable batteries of electric appliances, a resin for power distribution parts such as a breaker, and a sealing material for a motor and the like.

As described above, the present disclosure encompasses the following 1) to 13).

1) A resin molded article including at least a resin and an inorganic filler that is in a plate form, a spheroidal form, or a fiber form, in a region of 50% or more of a volume of the resin molded article, the resin having resin molecular chains oriented in a thickness direction of the resin molded article and the inorganic filler having a long axis oriented in an in-plane direction of the resin molded article, the resin molecular chains having an orientation degree $\alpha$ in a range of 0.6 or more and less than 1.0, the orientation degree being calculated by the following Formula (1), from a half-value width W obtained by wide-angle X-ray scattering measurement:

$$\text{orientation degree } \alpha = (360° - \Sigma W)/360° \ \ldots \ (1),$$

wherein W is a half-value width of a scattering peak between the resin molecular chains, in an intensity distribution in directions of azimuth angles in a range of 0° to 360° in the wide-angle X-ray scattering measurement.

2) The resin molded article as described in 1), wherein 50% or more of the volume of the resin molded article has a thickness of 1.5 mm or less.

3) The resin molded article as described in 1) or 2) wherein the resin exhibits a smectic liquid crystal phase when heated.

4) The resin molded article as described in any one of 1) to) wherein the resin has a number average molecular weight in a range of 3000 to 40000.

5) The resin molded article as described in any one of 1) to 4) wherein the resin is mainly made of a repeating unit represented by the following General Formula (2):

$$-A^1\text{-x-}A^2\text{-OCO}(CH_2)_m\text{COO-} \ldots \qquad (2),$$

wherein $A^1$ and $A^2$ each are independently a substituent group selected from the group consisting of an aromatic group, a condensed aromatic group, an alicyclic group, and an alicyclic heterocyclic group; x is a direct bond, or a bivalent substituent group selected from the group consisting of -O-, -S-, $-CH_2-CH_2-$, -C=C-, -C=C(Me)-, -C≡C-, -CO-O-, -CO-NH-, -CH=N-, -CH=N-N=CH-, -N=N- and - N(O)=N-; and m is an integer in a range of 2 to 20.

6) The resin molded article as described in 5) wherein - $A^1$-x-$A^2$- of the resin is represented by the following General Formula (3):

[Chem. 2]

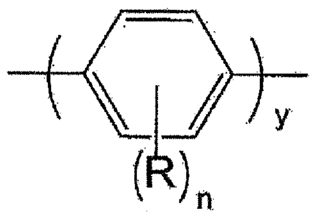

... (3),

wherein each R is independently an aliphatic hydrocarbon group, F, Cl, Br, I, CN, or $NO_2$; y is an integer in a range of 2 to 4; and n is an integer in a range of 0 to 4.

7) The resin molded article described in 5) or 6), wherein m of the resin is at least one selected from even numbers in a range of 4 to 14.

8) The resin molded article as described in any one of 1) to 7), wherein the inorganic filler is made of at least one kind of high thermally conductive inorganic compound selected from the group consisting of graphite, conductive metal powder, soft magnetic ferrite, zinc oxide, and metal silicon.

9) The resin molded article as described in any one of 1) to 7), wherein the inorganic filler is made of at least one kind of high thermally conductive inorganic compound selected from the group consisting of talc, boron nitride, aluminum oxide, and mica.

10) The resin molded article as described in any one of 1) to 7), wherein the inorganic filler is made of at least one kind of inorganic compound selected from the group consisting of carbon fiber, glass fiber, carbon nanotube, and wollastonite.

11) A method of producing the resin molded article as described in any one of 1) to 10), the method including the step of placing the resin in a shear flow field so that the resin molecular chains of the resin are oriented in the thickness direction of the resin molded article and the long axis of the inorganic filler is oriented in the in-plane direction of the resin molded article.

12) The method as described in 11), wherein the resin placed in the shear flow field is in a smectic liquid crystal state.

13) The method as described in 11) or 12), wherein the shear flow field is produced by injection molding.

[Examples]

The following more specifically discusses the resin molded article of the present invention, providing Examples and Comparative Examples. However, the present invention is not limited only to these Examples. Note that reagents manufactured by Wako Pure Chemical Industries, Ltd. were used as reagents described below if not otherwise specified.

[Evaluation Method]

Orientation Degree $\alpha$: By use of a wide-angle X-ray scattering apparatus (Rigaku Corporation, wide-angle X-ray scattering apparatus), irradiation with x-ray whose beam size was 1 mm was carried out from three directions with respect to a 1-mm square portion in the center of a resin molded article. Then, an orientation degree $\alpha$ was calculated by the following Formula (1) from thus obtained measurement results:

$$\text{Orientation Degree } \alpha = (360° - \Sigma W)/360° \quad \ldots (1),$$

wherein W is a half-value width of a scattering peak between the resin molecular chains, in an intensity distribution in directions of azimuth angles in a range of 0° to 360° in wide-angle X-ray scattering measurement.

Number Average Molecular Weight: A test sample was prepared by dissolving a sampled material in a mixed solvent of p-chlorophenol (Tokyo Kasei Chemical Industry Co., Ltd.) and toluene at a volume ratio of 3:8 so that a concentration of the sampled material became 0.25% by weight. Polystyrene was used as a reference material and a similar test sample solution was prepared. By high-temperature GPC (350 HT-GPC System, manufactured by Viscotek Corporation), measurement was carried out under conditions of a column temperature: 80°C and a flow rate of 1.00 mL/min. As a detector, a differential refractometer (RI) was used.

Thermophysical Property Measurement: In differential scanning calorimetry (DSC Measurement), a first temperature rise was produced at a rate of 10°C/min in a range from 50°C to 280°C and then, the temperature was lowered. Further, a second temperature rise at a rate of 10°C/min was produced. From a peak top of an endothermic peak in the second temperature rise, a glass transition point ($T_g$), a transition point ($T_s$) from a solid phase to a liquid crystal phase, and a transition point ($T_i$) from a liquid crystal phase to an isotropic phase were obtained.

Preparation of Resin Molded Articles: Plate-like resin molded articles having a width of 10 mm, a length of 40 mm, and a thickness of 1 mm or other thickness that is changed from 1 mm as appropriate were prepared by injection molding. An injection flow direction was arranged to be the same as a length direction of the plate-like resin molded articles.

Thermal Conductivity: Laser light absorbing spray (Black Guard Spray FC-153, manufactured by Fine Chemical Japan Co., Ltd.) was applied to a surface of each of the resin molded articles and dried. Then, thermal diffusivities of each of the resin molded articles were measured by use of a Xe flash analyzer (LFA447 Nanoflash, manufactured by NETZSCH Inc.). The thermal diffusivities measured here were thermal diffusivities in a thickness direction (hereinafter, referred to as an ND direction), the injection flow direction (hereinafter, referred to as an MD direction), and a direction (hereinafter, referred to as a TD direction) perpendicular to the flow direction. Further, a density of each of the resin molded articles was measured by a water replacement method, and a specific heat of each of the resin molded articles was measured by a DSC method. Thereafter, thermal conductivities of the resin molded articles were calculated by the following Formula (4):

$$\text{Thermal Conductivity} = \text{Thermal Diffusivity} \times \text{Density} \times \text{Specific Heat} \quad \ldots (4)$$

[Example 1]

Into a sealed reactor vessel provided with a reflux condenser, a thermometer, a nitrogen introduction tube, and a stirring rod, 4,4'-dihydroxyphenyl (450 g), dodecanedioic acid, and acetic anhydride were placed at a molar ratio of 1:1.1:2.1. With use of sodium acetate as a catalyst, reaction was carried out in a nitrogen atmosphere at 145°C under an ordinary pressure. As a result, a uniform solution was obtained. Then, while acetic acid was being distilled away, the uniform solution was heated to 260°C at a rate of 2°C/min and the uniform solution was further stirred at 260°C for one hour. While the uniform solution was kept at 260°C, the pressure was reduced down to 10 Torr over approximately 40 minutes, thereby producing a reduced pressure state, which was then maintained. Three hours after the start of reduction of the pressure, the pressure inside the vessel was brought back to the ordinary pressure with nitrogen gas. Then, resin was removed onto a stainless steel plate. Table 1 shows a molecular structure of the resin. The produced resin had a number average molecular weight of 9000. Further, the resin had $T_s$ of 200°C and $T_i$ of 245°C which are thermophysical properties of the resin. Then, a mixture of the resin obtained above and boron nitride (PT110, manufactured by Momentive Performance Materials Inc.) as a plate-like inorganic filler was prepared so that a ratio of the mixture of the resin and the boron nitride in volume% became 60:40. To this mixture, 0.2 part by weight of AO-60 (manufactured by ADEKA CORPORATION) with respect to 100 parts by weight of the resin was added as a stabilizer and mixed in a double screw extruder whose temperature was controlled to 200°C. Thereby, a resin composition was obtained. The obtained resin composition was molded into a plate form with a width of 10 mm, a length of 40 mm, and a thickness of 1 mm. In the injection molding, a cylinder temperature was set at 240°C that is a temperature at which the resin becomes a smectic liquid crystal phase, a mold temperature was set at 170°C, and an injection pressure was set at 0.7 MPa. Fig. 1 shows a wide-angle X-ray scattering profile. Fig. 2 shows an intensity distribution at azimuth angles in an (ND, TD) pattern. Further, Table 2 shows results of various measurements. In an (ND, MD) pattern and the (ND, TD) pattern of Fig. 1, at an angle close to $2\theta = 21°$, reflection from a space corresponding to 4.2 Å between resin molecular chains is observed on the equator. In addition, at an angle close to $2\theta = 27°$, reflection from a (002) plane of boron nitride corresponding to 3.3 Å is observed on the meridian. Accordingly, the resin molecular chains are oriented in the thickness direction of the resin molded article, while boron nitride is oriented in an in-plane direction of the resin molded article. The boron nitride was oriented in the in-plane direction at an orientation degree of 0.83.

[Comparative Example 1]

In Comparative Example 1, a resin molded article was obtained and evaluated as in Example 1, except that the resin employed in Example 1 was changed to polybutylene terephthalate (NOVADURAN 5008, manufactured by Mitsubishi Engineering Plastics Corporation). Fig. 3 shows a wide-angle X-ray scattering profile, and Table 2 shows results of various measurements. It is clear from Fig. 3, that, although boron nitride is oriented in an in-plane direction of the resin molded article as in Example 1, the resin molecular chains in Comparative Example 1 are randomly oriented.

[Comparative Example 2]

In Comparative Example 2, a resin molded article was obtained and evaluated as in Example 1, except that the resin employed in Example 1 was changed to a nematic liquid crystal polymer (UENOLCP 8100, manufactured by Ueno Fine Chemicals Industry, Ltd.). Fig. 4 shows a wide-angle X-ray scattering profile, and Table 2 shows results of various measurements. It is clear from Fig. 4, that boron nitride is oriented in an in-plane direction of the resin molded article as in Example 1, whereas the resin molecular chains in Comparative Example 2 are oriented in an MD direction in the resin molded article. According to Table 2, improvement in thermal conductivity was the greatest in the MD direction in which resin molecular chains were oriented, whereas improvement particularly in an ND direction was small.

[Comparative Example 3]

In Comparative Example 3, a resin molded article was obtained as in Example 1, except that a cylinder temperature in injection molding was changed to 270°C at which the resin becomes an isotropic phase. Table 2 shows results of various measurements. The resin molecular chains were randomly oriented in the resin molded article. Meanwhile, an orientation degree of boron nitride in an in-plane direction was 0.83.

[Example 2]

In Example 2, a resin molded article was obtained as in Example 1, except that dodecanedioic acid in Example 1 was changed to tetradecanedioic acid. Table 1 shows a molecular structure of thus obtained resin. The resin had a number average molecular weight of 9500. Further, the resin had $T_s$ of 190°C and $T_i$ of 235°C which are thermophysical properties of the resin. Further, boron nitride was mixed as in Example 1 in the resin, and then a plate-like resin molded article was obtained by injection molding. In the injection molding, a cylinder temperature was set at 225°C that is a temperature at which the resin becomes a smectic liquid crystal phase, a mold temperature was set at 160°C, and an injection pressure was set at 0.7 MPa. Fig. 2 shows results of various measurements.

[Example 3]

In Example 3, a resin molded article was obtained as in Example 1, except that a mixture ratio in volume% of the resin of Example 1 and inorganic fillers was arranged to be such that resin : boron nitride : glass fiber (T187H/PL, manufactured by Nippon Electric Glass Co., Ltd.) = 60 : 30 : 10. Orientation of the boron nitride and the glass fiber was checked by observation of a cross section of the resin molded article along an in-plane direction under an SEM (scanning electron microscope). Randomly selected 50 glass fibers or boron nitride were measured for respective angles of long axis directions with respect to a thickness direction of the resin molded article. This measurement was carried out in a direction where these boron nitride molecules or glass fibers were observable. An average value of the angles for boron nitride was 78 degrees, and an average value of the angles of the glass fibers was 82 degrees. Accordingly, it was confirmed that the long axes of the respective inorganic fillers were oriented in the in-plane direction of the resin molded article. Table 2 shows results of various measurements.

[Example 4]

In Example 4, a resin molded article was obtained as in Example 1, except that boron nitride in Example 1 was changed to graphite (CPB-80, manufactured by Chuetsu Graphite Works Co., Ltd.). Table 2 shows results of various measurements. Wide-angle X-ray scattering measurement revealed that an orientation degree of the graphite in an in-plane direction was 0.85.

It is clear from the above that when resin molecular chains are oriented in a thickness direction of a resin molded article and a long axis of an inorganic filler is oriented in an in-plane direction of the resin molded article, the resin molded article has excellent thermal conductivities in both the thickness direction and the in-plane direction. Such a resin molded article is applicable to use as a heat dissipating or heat transmitting resin material in various situations, for example, in fields of electric, electronic, and automotive industries. Accordingly, the resin molded article is industrially useful.

[Table 1]

| | Mesogenic Group | | | | Flexible Group | |
|---|---|---|---|---|---|---|
| | $A^1$ | x | $A^2$ | | | |
| Example 1 | 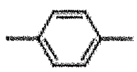 | - (direct bond) | 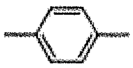 | 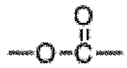 | $-(CH_2)_{10}-$ | 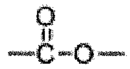 |
| Example 2 | 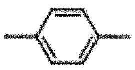 | - (direct bond) | 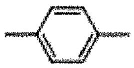 | 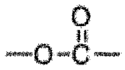 | $-(CH_2)_{12}-$ | 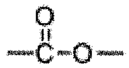 |

[Table 2]

| | | Example 1 | Comparative Example 1 | Comparative Example 2 | Comparative Example 3 |
|---|---|---|---|---|---|
| Thermal Conductivity (W/(m·K)) | ND | 3·3 | 1.2 | 1.2 | 1.7 |
| | MD | 16 | 8.4 | 6.5 | 11 |
| | TD | 16 | 8.5 | 4.1 | 11 |
| Orientation Degree α | | 0.66 | 0 | 0.7 (MD Orientation) | 0 |
| | | Example 2 | Example 3 | Example 4 | |
| Thermal Conductivity (W/m·k)) | ND | 3.2 | 2.1 | 5.5 | |
| | MD | 16 | 10 | 40 | |
| | TD | 16 | 10 | 40 | |
| Orientation Degree α | | 0.65 | 0.71 | 0.7 | |

## Claims

**1.** A resin molded article comprising at least a resin and an inorganic filler that is in a plate form, a spheroidal form, or a fiber form,
in a region of 50% or more of a volume of the resin molded article, the resin having resin molecular chains oriented in a thickness direction of the resin molded article and the inorganic filler having a long axis oriented in an in-plane direction of the resin molded article,
the resin molecular chains having an orientation degree α in a range of 0.6 or more and less than 1.0, the orientation degree being calculated by the following Formula (1), from a half-value width W obtained by wide-angle X-ray scattering measurement:

$$\text{orientation degree } \alpha = (360° - \Sigma W)/360° \quad \dots (1),$$

wherein W is a half-value width of a scattering peak between the resin molecular chains, in an intensity distribution in directions of azimuth angles in a range of 0° to 360° in the wide-angle X-ray scattering measurement, wherein 50% or more of the volume of the resin molded article has a thickness of 1.5 mm or less,
the resin is mainly made of a repeating unit represented by the following General Formula (2):

$$-A^1\text{-x-}A^2\text{-OCO}(CH_2)_m\text{COO-} \dots \quad (2),$$

wherein $-A^1$-x-$A^2$- of the resin is represented by the following General Formula (3):

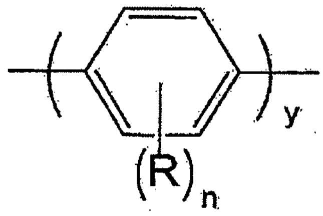

··· (3),

wherein each R is independently an aliphatic hydrocarbon group, F, Cl, Br, I, CN, or $NO_2$; y is an integer in a range of 2 to 4; n is an integer in a range of 0 to 4; and m is an integer in a range of 2 to 20, and the resin exhibits a smectic liquid crystal phase when heated.

2. The resin molded article as set forth in claim 1, wherein the resin has a number average molecular weight in a range of 3000 to 40000.

3. The resin molded article as set forth in claim 1, wherein m of the resin is at least one selected from even numbers in a range of 4 to 14.

4. The resin molded article as set forth in any one of claims 1 to 3, wherein the inorganic filler is made of at least one kind of high thermally conductive inorganic compound selected from the group consisting of graphite, conductive metal powder, soft magnetic ferrite, zinc oxide, and metal silicon.

5. The resin molded article as set forth in any one of claims 1 to 3, wherein the inorganic filler is made of at least one kind of high thermally conductive inorganic compound selected from the group consisting of talc, boron nitride, aluminum oxide, and mica.

6. The resin molded article as set forth in any one of claims 1 to 3, wherein the inorganic filler is made of at least one kind of inorganic compound selected from the group consisting of carbon fiber, glass fiber, carbon nanotube, and wollastonite.

7. A method of producing the resin molded article as set forth in any one of claims 1 to 6, the method comprising the step of placing the resin in a shear flow field so that the resin molecular chains of the resin are oriented in the thickness direction of the resin molded article and the long axis of the inorganic filler is oriented in the in-plane direction of the resin molded article.

8. The method as set forth in claim 7, wherein the resin placed in the shear flow field is in a smectic liquid crystal state.

9. The method as set forth in claim 7 or 8, wherein the shear flow field is produced by injection molding.

**Patentansprüche**

1. Ein Harzformkörper, umfassend mindestens ein Harz und einen anorganischen Füllstoff, welcher plättchenförmig, kugelförmig oder faserförmig ist,
in einem Bereich von 50% oder mehr eines Volumens des Harzformkörpers, wobei das Harz Harzmolekülketten aufweist, welche in einer Dickenrichtung des Harzformkörpers ausgerichtet sind und der anorganische Füllstoff eine Längsachse aufweist, welche in Richtung der Ebene des Harzformkörpers ausgerichtet ist,
wobei die Harzmolekülketten einen Orientierungsgrad $\alpha$ in einem Bereich von 0,6 oder mehr und weniger als 1,0 aufweisen, wobei der Orientierungsgrad durch die folgende Formel (1) aus einer Halbwertsbreite W, erhalten durch eine Messung mittels Weitwinkel-Röntgenstreuung, berechnet wird:

$$\text{Orientierungsgrad } \alpha = (360° - \Sigma W)/360° \ldots (1),$$

wobei W eine Halbwertsbreite eines Streuungspeaks zwischen den Harzmolekülketten in einer Intensitätsverteilung in Richtungen von Azimutwinkeln in einem Bereich von 0° bis 360° in der Messung mittels Weitwinkel-Röntgenstreuung ist, wobei 50% oder mehr des Volumens des Harzformkörpers eine Dicke von 1,5 mm oder weniger aufweisen,
das Harz hauptsächlich aus einer Wiederholungseinheit, dargestellt durch die folgende allgemeine Formel (2) hergestellt ist:

$$-A^1\text{-x-}A^2\text{-OCO}(CH_2)_mCOO\text{- ...} \qquad (2),$$

wobei $-A^1$-x-$A^2$- des Harzes durch die allgemeine Formel (3) dargestellt ist:

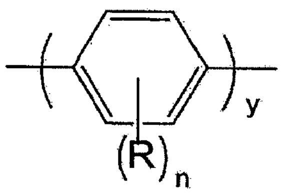

... (3),

wobei jedes R unabhängig eine aliphatische Kohlenwasserstoffgruppe, F, Cl, Br, I, CN oder $NO_2$ ist; y eine ganze Zahl in einem Bereich von 2 bis 4 ist; n eine ganze Zahl in einem Bereich von 0 bis 4 ist; und m eine ganze Zahl in einem Bereich von 2 bis 20 ist, und
das Harz bei Erwärmung eine smektische Flüssigkristallphase aufweist.

2. Der Harzformkörper wie in Anspruch 1 dargelegt, wobei das Harz ein Zahlenmittel des Molekulargewichts in einem Bereich von 3000 bis 40000 aufweist.

3. Der Harzformkörper wie in Anspruch 1 dargelegt, wobei m des Harzes mindestens eines ist ausgewählt aus geraden Zahlen in einem Bereich von 4 bis 14.

4. Der Harzformkörper wie in einem der Ansprüche 1 bis 3 dargelegt, wobei der anorganische Füllstoff aus mindestens einer Art einer hoch wärmeleitfähigen anorganischen Verbindung ausgewählt aus der Gruppe bestehend aus Graphit, leitfähigem Metallpulver, weichmagnetischem Ferrit, Zinkoxid und metallischem Silizium hergestellt ist.

5. Der Harzformkörper wie in einem der Ansprüche 1 bis 3 dargelegt, wobei der anorganische Füllstoff aus mindestens einer Art einer hoch wärmeleitfähigen anorganischen Verbindung ausgewählt aus der Gruppe bestehend aus Talk, Bornitrid, Aluminiumoxid und Glimmer hergestellt ist.

6. Der Harzformkörper wie in einem der Ansprüche 1 bis 3 dargelegt, wobei der anorganische Füllstoff aus mindestens einer Art einer anorganischen Verbindung ausgewählt aus der Gruppe bestehend aus Kohlenstofffaser, Glasfaser, Kohlenstoffnanoröhre und Wollastonit hergestellt ist.

7. Ein Verfahren zur Herstellung des Harzformkörpers wie in einem der Ansprüche 1 bis 6 dargelegt, wobei das Verfahren den Schritt des Platzierens des Harzes in einem Scherströmungsfeld, so dass die Harzmolekülketten des Harzes in die Dickenrichtung des Harzformkörpers ausgerichtet werden und die Längsachse des anorganischen Füllstoffes in Richtung der Ebene des Harzformkörpers ausgerichtet wird.

8. Das Verfahren wie in Anspruch 7 dargelegt, wobei das in dem Scherströmungsfeld platzierte Harz in einem smektischen Flüssigkristallzustand vorliegt.

9. Das Verfahren wie in Anspruch 7 oder 8 dargelegt, wobei das Scherströmungsfeld durch Spritzgießen erzeugt wird.

## Revendications

1. Article moulé en résine comprenant au moins une résine et une charge inorganique qui est sous une forme de plaque, sous une forme sphéroïdale, ou sous une forme de fibre,
dans une région de 50 % ou plus du volume de l'article moulé en résine, la résine ayant des chaînes moléculaires de résine orientées dans la direction de l'épaisseur de l'article moulé en résine et la charge inorganique ayant un

axe long orienté dans la direction du plan de l'article moulé en résine, les chaînes moléculaires de résine ayant un degré d'orientation $\alpha$ situé dans la plage allant de 0,6 ou plus à moins de 1,0, le degré d'orientation étant calculé par la formule (1) suivante à partir de la largeur à mi-hauteur W obtenue par mesure de diffusion des rayons X aux grands angles :

$$\text{degré d'orientation } \alpha = (360° - \Sigma W) / 360° \quad \ldots (1),$$

où W est la largeur à mi-hauteur du pic de diffusion entre les chaînes moléculaires de résine, dans une distribution d'intensité dans des directions d'angles azimutaux dans la plage de 0° à 360° dans la mesure de diffusion des rayons X aux grands angles, où 50 % ou plus du volume de l'article moulé en résine a une épaisseur de 1,5 mm ou moins,
la résine est principalement faite d'un motif répétitif représenté par la formule générale (2) suivante :

$$-A^1\text{-x-}A^2\text{-OCO}(CH_2)_m\text{COO- ...} \qquad (2),$$

où $-A^1$-x-$A^2$- de la résine est représenté par la formule générale (3) suivante :

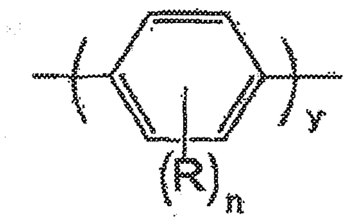

... (3),

dans laquelle chaque R est indépendamment un groupe hydrocarboné aliphatique, F, Cl, Br, I, CN ou $NO_2$ ; y est un entier situé dans la plage allant de 2 à 4 ; n est un entier situé dans la plage allant de 0 à 4 ; et m est un entier situé dans la plage allant de 2 à 20, et la résine présente une phase de cristal liquide smectique quand elle est chauffée.

2. Article moulé en résine selon la revendication 1, dans lequel la résine a une masse moléculaire moyenne en nombre située dans la plage allant de 3 000 à 40 000.

3. Article moulé en résine selon la revendication 1, dans lequel m dans la résine est au moins l'un choisi parmi les nombres paires situés dans la plage allant de 4 à 14.

4. Article moulé en résine selon l'une quelconque des revendications 1 à 3, dans lequel la charge inorganique est faite d'au moins un type de composé inorganique fortement conducteur thermiquement choisi dans l'ensemble constitué par le graphite, un métal conducteur en poudre, la ferrite magnétique douce, l'oxyde de zinc, et le silicium métallique.

5. Article moulé en résine selon l'une quelconque des revendications 1 à 3, dans lequel la charge inorganique est faite d'au moins un type de composé inorganique fortement conducteur thermiquement choisi dans l'ensemble constitué par le talc, le nitrure de bore, l'oxyde d'aluminium, et le mica.

6. Article moulé en résine selon l'une quelconque des revendications 1 à 3, dans lequel la charge inorganique est faite d'au moins un type de composé inorganique choisi dans l'ensemble constitué par les fibres de carbone, les fibres de verre, les nanotubes de carbone, et la wollastonite.

7. Méthode de production de l'article moulé en résine tel que défini dans l'une quelconque des revendications 1 à 6, la méthode comprenant l'étape de placement de la résine dans un champ de flux de cisaillement de façon que les chaînes moléculaires de résine de la résine soient orientées dans la direction de l'épaisseur de l'article moulé en résine et que l'axe long de la charge inorganique soit orienté dans la direction du plan de l'article moulé en résine.

8. Méthode selon la revendication 7, dans laquelle la résine placée dans le champ de flux de cisaillement est dans un état de cristal liquide smectique.

9. Méthode selon la revendication 7 ou 8, dans laquelle le champ de flux de cisaillement est produit par moulage par injection.

FIG. 1

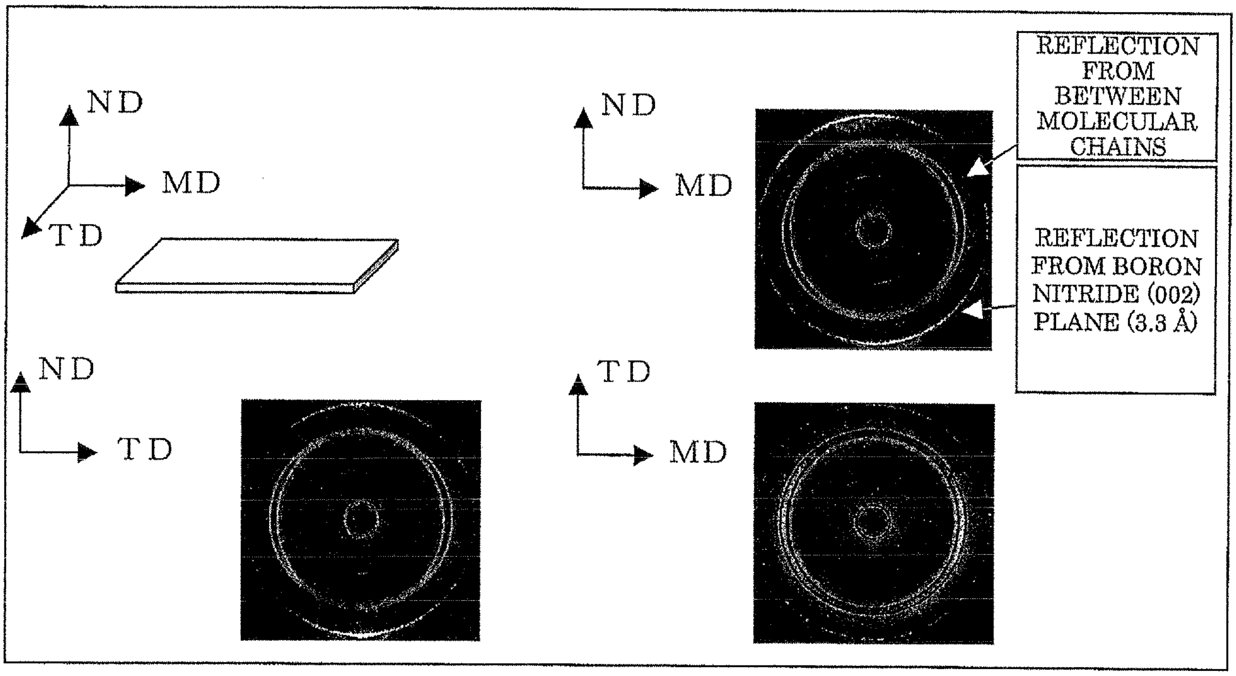
ND
MD
TD
ND
MD
REFLECTION FROM BETWEEN MOLECULAR CHAINS
REFLECTION FROM BORON NITRIDE (002) PLANE (3.3 Å)
ND
TD
TD
MD

FIG. 2

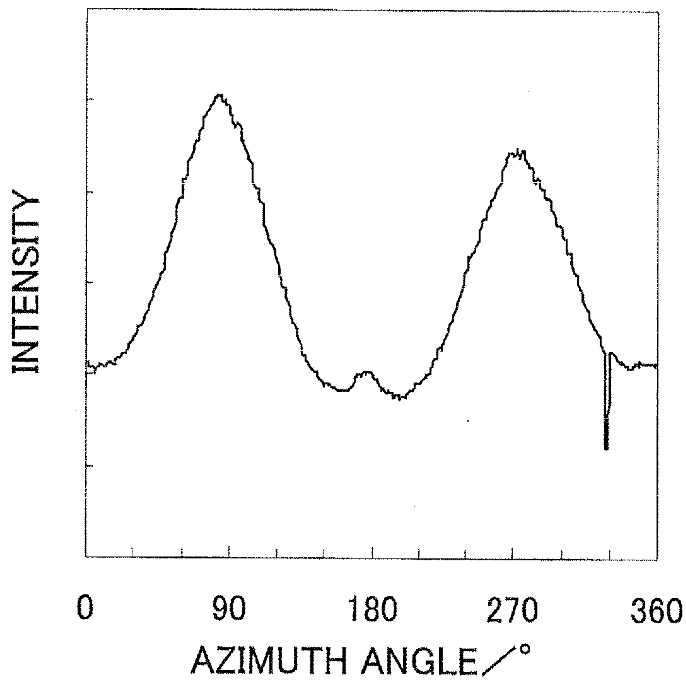
INTENSITY
0
90
180
270
360
AZIMUTH ANGLE／°

FIG. 3

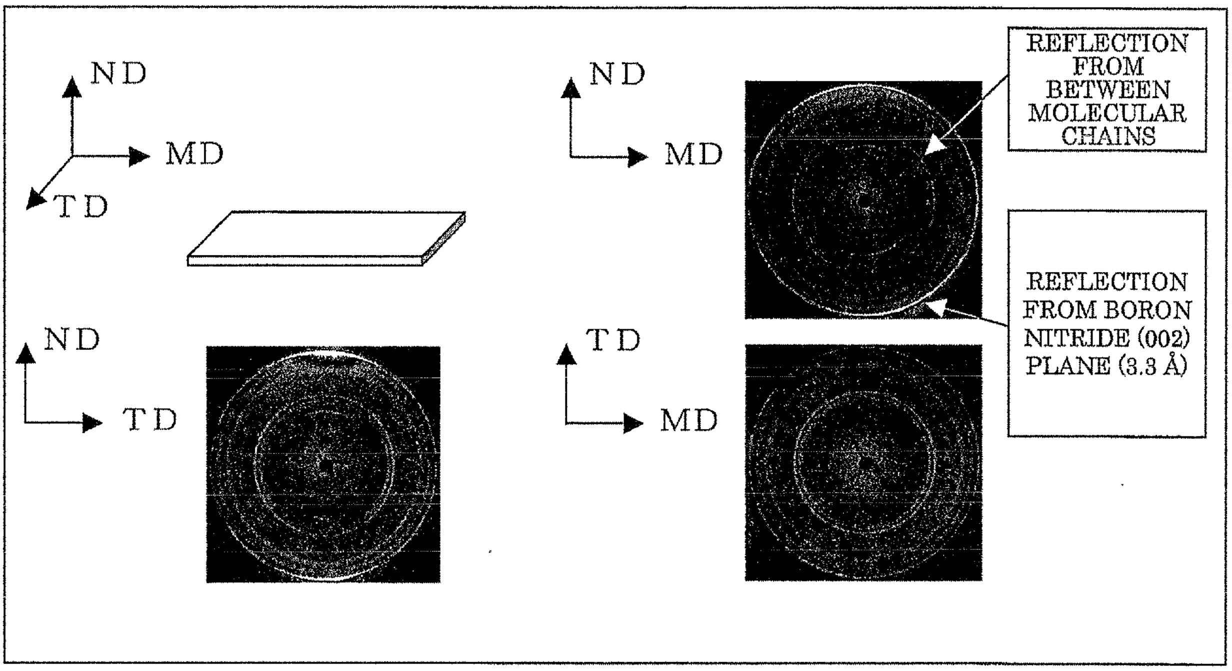
ND
MD
TD
ND
MD
REFLECTION FROM BETWEEN MOLECULAR CHAINS
ND
TD
TD
MD
REFLECTION FROM BORON NITRIDE (002) PLANE (3.3 Å)

FIG. 4

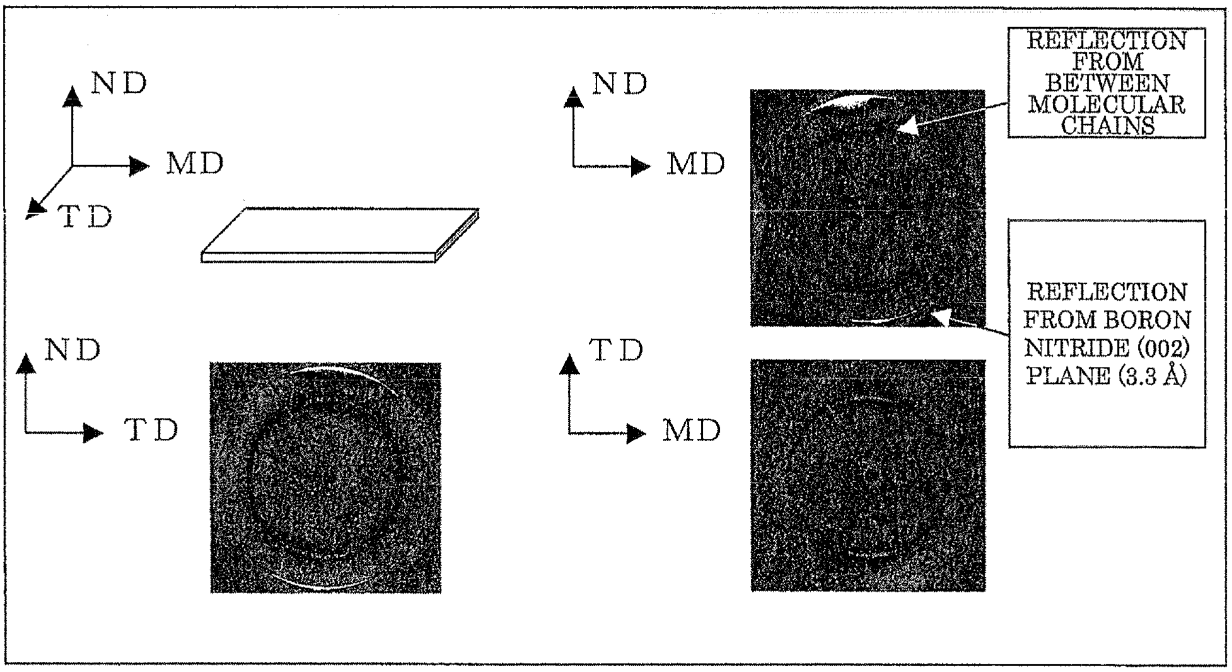
ND
MD
TD
ND
MD
REFLECTION FROM BETWEEN MOLECULAR CHAINS
ND
TD
TD
MD
REFLECTION FROM BORON NITRIDE (002) PLANE (3.3 Å)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008150525 A
- WO 2010050202 A
- WO 2011132389 A1


### Non-patent literature cited in the description


- *Phiysical Review,* 1992, vol. 45, 994-1008
- *Macromolecules,* 2004, vol. 37, 2527-2531
- *Journal of Polymer Science Polymer Physics Edition,* 1983, vol. 21, 1119-1131
- *Macromolecules,* 1983, vol. 16, 1271-1279
- *Macromolecules,* 1984, vol. 17, 2288-2295